# EUROPEAN PATENT APPLICATION

(11) **EP 2 706 311 A1**
(43) Date of publication of application: **12.03.2014**
(21) Application number: 13191738.7
(22) Date of filing: 30.05.2012
(51) Int. Cl.: F25B 41/00, F25B 45/00, F16L 37/00

(54) **Maintenance process for an air conditioning plant**

(30) Priority: 17.06.2011 IT PR20110055
(62) Divisional of application: 12169910.2
(71) Applicant: Brain Bee Holding S.p.A., 43126 Parma (IT)
(72) Inventor: Cantadori, Andrea, 43123 PARMA (IT)
(74) Representative: Benelli, Cristian

(57) **Abstract**

Maintenance process for an air conditioning plant, comprising the steps of: recovering the refrigerant fluid present in the air conditioning plant; filtering the recovered refrigerant fluid; injecting refrigerant fluid into the air conditioning plant through a connector device (1); creating vacuum in the connector device (1); checking the seal of the coupling between the connector device (1) and the air conditioning plant and signalling any leaks.

## Description

### FIELD OF THE INVENTION

The present invention has as its subject a maintenance process for an air conditioning plant and a connector device usable in it. In particular, the present invention finds application in the automobile field, for example in vehicle repair shops.

Connectors are known of the type described in patent document US2004/0129013 .

It is known that some types of air conditioning plant are subject to leaks of refrigerant fluid and therefore require periodic recharging. To this end, devices for the maintenance of air conditioning plants have been developed which are capable of recovering, recycling and recharging the refrigerant fluid into the plant. To connect the recovery or recharging tube to the air conditioning plant, quick connectors are used, dimensioned to correspond to specific standards in the sector, such as for example standards SAE J639 and J2888.

During the recovery and recycling step, the refrigerant fluid (typically R134a or similar) is withdrawn from the air conditioning plant through the quick connector with the recovery tube. Subsequently, the fluid is purified and stored in a storage tank.

During the recharging step, a vacuum pump located downstream from the storage tank, creates a depression which moves the refrigerant fluid from the tank to the air conditioning system. Some solutions provide for a load cell connected to the tank, capable of measuring its mass for the purpose of monitoring both the quantity of recycled refrigerant fluid and the quantity subsequently injected into the air conditioning system. The Applicant has furthermore developed a maintenance device provided with a dosing system based on volume instead of mass (Italian patent application no. PR2010A000015), using a variable-volume chamber defined by a cylinder-piston coupling.

In all cases, the refrigerant fluid is injected into the air conditioning plant, passing through a quick connector (standard J639 specifies a connector of "female" type) interposed between the charging tube and the joint (standard J639 specifies a connector of "male" type) on the vehicle side.

The quick connector features internally a tubular cavity in which slides an element suitable for defining two chambers communicating with each other: a first chamber leading to the charging tube and a second chamber leading to the joint for the air conditioning plant. At the coupling step, the sliding element presses on the pin for sealing the joint of "male" type, causing it to open and thus putting into fluid communication the two chambers of the quick connector (and therefore the charging tube) with the air conditioning plant.

When recharging has taken place, the quick connector is disconnected from the joint, causing the closure of the sealing pin in such a way as to prevent leakage of further refrigerant fluid.

The principal disadvantage of this solution is linked to the fact that when the quick connector is disconnected from the plant, any fluid still present in the two chambers is dispersed into the surrounding environment. This may entail considerable risks in terms of safety if the fluid used is flammable (e.g. R-1234yf). On the other hand, a refrigerant fluid such as R-134a, even if it is not flammable, contributes considerably to the greenhouse effect, since a gram of R-134a is equivalent to 1430 grams of CO2. Diffusion of the refrigerant fluid therefore contributes substantially to environmental pollution.

Added to this is the fact that, in the event of faulty closure of the sealing pin (for example because of mechanical obstructions, such as dust particles, or malfunctions), the refrigerant fluid continues to diffuse into the surrounding environment when recharging is completed.

On the other hand, the safety regulations relating to maintenance devices for air conditioning plants require that the internal cavity in quick connectors (the so-called "dead space") should be evacuated.

To satisfy these specifications it would not be sufficient to make a bleed valve for the dead space in the quick connector. In fact, the bleed valve would serve to reduce the residual fluid present in the dead space, without however responding to the problem regarding the seal of the pin.

In this context, the technical task at the base of the present invention is to propose a maintenance process for an air conditioning plant and a connector device usable in it, which will overcome the disadvantages of the known art mentioned above.

In particular, it is an object of the present invention to make available a maintenance process for an air conditioning plant and a connector device usable in it, which ensure complete compliance with the safety regulations in the sector.

Therefore, the object of the present invention is to propose a maintenance process for an air conditioning plant and a connector device usable in it, which ensure reliable evacuation of the "dead space" in the connector device.

The declared technical task and the specified object are substantially achieved by a maintenance process for an air conditioning plant and a connector device for use in the latter, comprising the technical characteristics set forth in one or more of the attached claims.

Additional characteristics and advantages of the present invention will become more readily apparent from the indicative, and hence non-limiting, description of a preferred but not exclusive embodiment of a maintenance process for an air conditioning plant and a connector device for use therein, as illustrated in the attached drawings in which:
- figures 1, 2 and 3 illustrate a connector device, according to the present invention, in sectioned view, respectively with piston in the third, second and first position;
- figure 4 illustrates a joint for an air conditioning plant, according to the known art, in sectioned view.

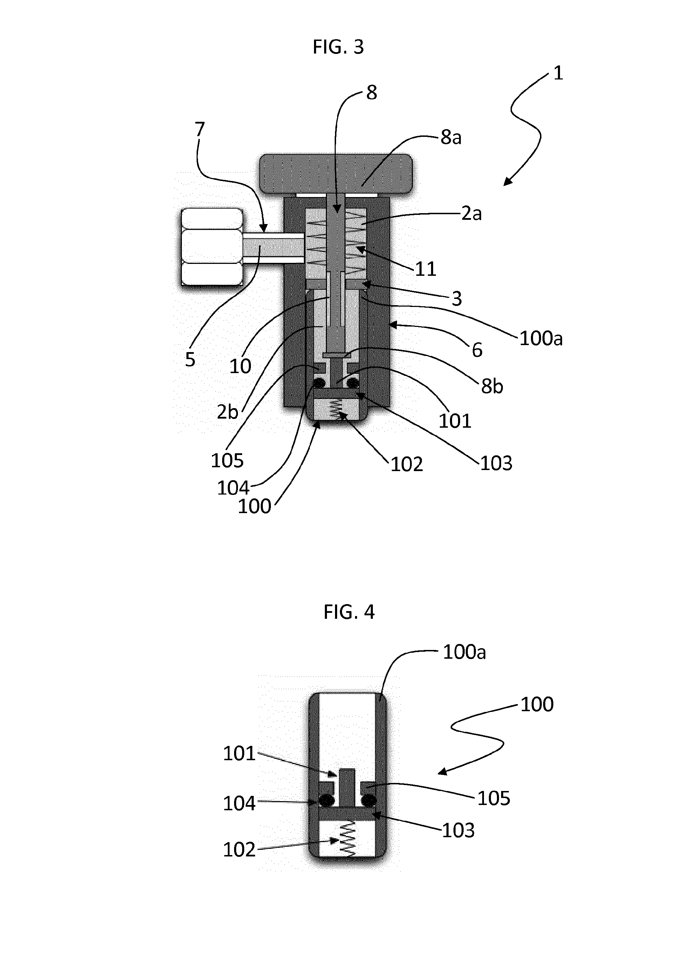

With reference to the drawings, number 1 indicates a connector device interposable between a joint 100 of an air conditioning plant (visible in figure 4) and a unit for recovering or recharging refrigerant fluid (not illustrated).

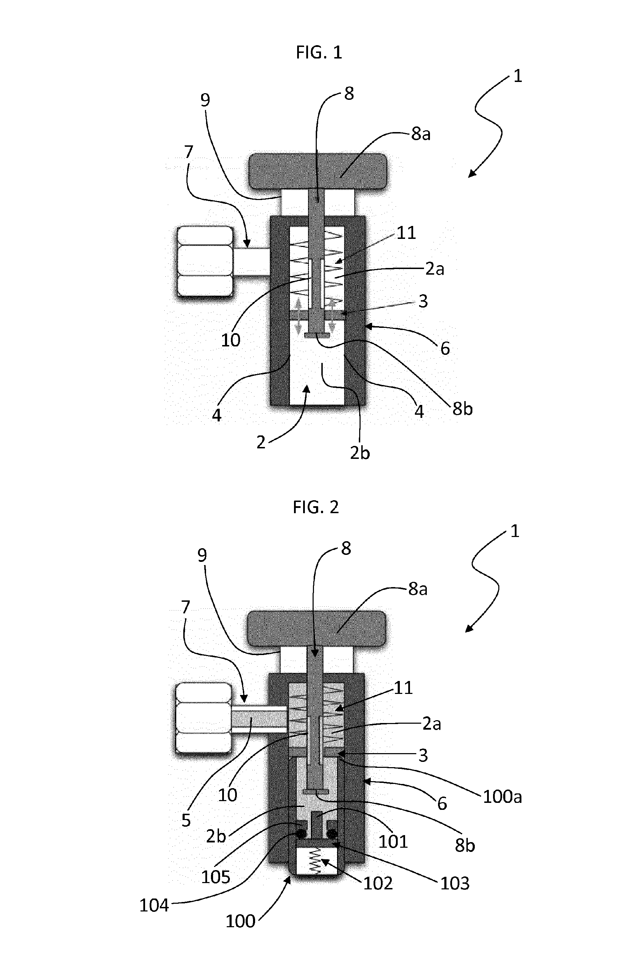

The connector device (1) comprises a tubular cavity 2 in which are formed a first chamber 2a susceptible of communicating with the recovery or recharging unit, and a second chamber 2b susceptible of communicating with the joint 100 of the air conditioning plant. As is visible in figures 1 to 3, the first chamber 2a and the second chamber 2b are adjacent.

The division between the first chamber 2a and the second chamber 2b is formed by a plate-shaped separating body 3 slidably arranged inside the tubular cavity 2 in such a way as to be capable of abutting on the joint 100 of the air conditioning plant; In particular, the plate-shaped separating body 3 is linearly translatable along the extension of the tubular cavity 2. Preferably, the plate-shaped separating body 3 is slidably coupled to form a seal to internal walls 4 of the tubular cavity 2. The movement of the plate-shaped body 3 inside the tubular cavity 2 makes it possible to vary the volume of the two chambers 2a, 2b. In particular, in an operative configuration of the connector device 1, whereby the device 1 is coupled with the joint 100, the volume of the second chamber 2b increases at the expense of the volume of the first chamber 2a and the plate-shaped body 3 abuts against the joint 100 of the air conditioning plant (see figures 2 and 3).

Preferably, in the first chamber 2a there are present elastic means 11 (e.g. spring) operatively active on the plate-shaped body 3 to limit its travel along the tubular cavity 2 during the coupling with the joint 100 of the air conditioning plant.

In the preferred embodiment, tubular cavity 2 has a substantially cylindrical form. In this case, the plate-shaped separating body 3 is a disc sliding on the internal lateral walls 4 of the (cylindrical) cavity 2. In the embodiment here described and illustrated, the connection between the recovery or recharging unit and the first chamber 2a takes place through a conduit 5 of the connector device 1. This conduit 5 leads into the first chamber 2a. In particular, the tubular cavity 2 is defined by a principal tube 6, from which a secondary tube 7 branches off, defining said conduit 5. The branching-off of the secondary tube 7 from the principal tube 6 takes place in proximity to the first chamber 2a. In the embodiment here described and illustrated, the second chamber 2b is open in such a way as to at least partially accommodate the joint 100 of the air conditioning plant. In this way, the connector device 1 and the joint 100 of the air conditioning plant form a male-female coupling. In particular, in the case of a cylindrical tubular cavity 2, the second chamber 2b is open at one of the bases of the cylinder.

The connector device 1 comprises a piston 8 which extends through a through hole in the plate-shaped separating body 3. Piston 8 and plate-shaped body 3 are slidably coupled.

In particular, the piston 8 has a first end 8a situated outside the tubular cavity 2 and a second end 8b situated in the second chamber 2b.

In the embodiment here described and illustrated, the piston 8 has the form of a plunger, so that the first end 8a has an enlarged base by comparison with the diameter of the body of the piston 8.

The connector device 1 comprises a guide section 9 for the piston 8, which extends starting from one end of the principal tube 6. Preferably, the body of the piston 8 has at least one section externally threaded, suitable for engaging with an internal thread on the guide section 9. The first end 8a of the piston 8 is freely accessible from the outside of the connector device 1 and, under the application of a twisting moment, comes into abutment with the outside of guide section 9.

The second end 8b of the piston has a larger size than the size of the through hole in the plate-shaped body 3, in such a way as to prevent the decoupling of the piston 8 from the rest of the connector device 1.

Originally, the piston 8 is provided with at least one surface groove 10 and can assume at least the following positions during its movement through the through hole:
- a first position in which the surface groove 10 passes through the through hole from the first chamber 2a to the second chamber 2b so as to enable fluid communication between chambers 2a, 2b and the piston 8 is susceptible of interacting with the joint 100 of the air conditioning plant in such a way as to allow the passage of the refrigerant fluid from the recovery or recharging unit to the air conditioning plant and vice versa (see figure 3);
- a second position in which the surface groove 10 passes through the through hole from the first chamber 2a to the second chamber 2b so as to enable fluid communication between said chambers 2a, 2b but the piston 8 avoids interacting with the joint 100 in such a way as to enable the evacuation of the air and the refrigerant fluid present in the tubular cavity 2 (see figure 2);
- a third position in which the surface groove 10 is situated in said first chamber 2a so as to interrupt the fluid communication between said chambers 2a, 2b (see figure 1).

In particular, the surface groove 10 follows the longitudinal extension of the piston 8 and has a length greater than the thickness of the plate-shaped body 3. The maintenance process for an air conditioning plant, according to the present invention, is described below. Let us suppose that the recovery and filtering of the refrigerant fluid from the air conditioning plant has already been carried out.

Let us consider initially the connector device 1 in the third position, in which the surface groove 10 is in the first chamber 2a, so as to prevent fluid communication between the first chamber 2a and the second chamber 2b (see figure 1).

The joint 100 of the air conditioning plant, illustrated in figure 4, has a sealing pin 101 in a closed configuration. In particular, the sealing pin 101 has a disc 103 which, under the action of a compression spring 102, presses against a stop element 105 through a gasket 104.

The secondary tube 7 of the connector device 1 is connected to a tube on the recharging unit.

The connector device 1 has then to be connected to the air conditioning plant. To do this, the connector device 1 is brought into contact with the joint 100 of the air conditioning plant on the open side of the second chamber 2b, in such a way that the latter houses the joint 100. During the coupling, the joint 100 presses with one of its ends 100a on the plate-shaped body 3, causing its translation along the tubular cavity 2. In this way, the volume of the first chamber 2a is reduced and the spring 11 contained within it is compressed (see figure 2).

The translation of the plate-shaped body 3 brings about the sliding of the through hole with respect to the piston 8 (which is held stationary). In this way, the surface groove 10 arrives at a "bridging" position between the first chamber 2a and the second chamber 2b, enabling fluid communication between these chambers 2a, 2b. The second end 8b of the piston 8, although it has been brought close to the sealing pin 101 of the joint 100, avoids interacting with the latter. In this way, the piston 8 arrives at the second position. Subsequently, a twisting force is applied to the first end 8a of the piston 8, so that the externally threaded section of the piston 8 is screwed into the guide section 9 and the second end 8b of the piston 8 presses on the sealing pin 101, making it pass into an open configuration. The disc 103, carrying the gasket 104, thus moves away from the stop element 105. The piston 8 arrives at the first position (see figure 3).

The refrigerant fluid is sent by the recharging unit to the air conditioning plant, passing through conduit 5, first chamber 2a, second chamber 2b and joint 100.

When recharging is completed, the piston 8 is unscrewed in such a way as to distance its second end 8b from the sealing pin 101, which returns to the closed configuration. The piston 8 then arrives again at the second position, so that the refrigerant fluid present in the tubular cavity 2 can be recovered.

Subsequently, the seal is checked on the coupling between connector device 1 and joint 100 of the air conditioning plant. If the seal is effective, the evacuation is declared completed, while in the case of leaks from sealing pin 101, an alarm is generated.

From the description given above, the characteristics of the maintenance process for an air conditioning plant and of the connector device for use therein, according to the present invention, are clear, as also are the advantages.

In particular, the presence of the grooved piston which can slide to three positions enables the connector device to distinguish the functions of rest, evacuation and recovery/recharging. In particular, in the second position of the piston, the sealing pin on the vehicle side is closed and it is possible to evacuate the dead space, recovering the refrigerant present. This brings about a truly remarkable saving, bearing in mind that it is actually possible to recover up to 3 grams of refrigerant.

It should also be taken into account that the check on the seal of the coupling between the connector device and the air conditioning plant is of fundamental importance for guaranteeing the reliability of the evacuation of the dead space.

## Claims

1. Maintenance process for an air conditioning plant, comprising the steps of:
a. recovering the refrigerant fluid present in the air conditioning plant;
b. filtering the recovered refrigerant fluid;
c. injecting refrigerant fluid into the air conditioning plant through at least a connector device (1);
d. creating vacuum in the connector device (1);
e. checking the seal of the coupling between the connector device (1) and the air conditioning plant and signalling any leaks.

2. Maintenance process according to claim 1, wherein the step of creating the vacuum in the connector device (1) takes place at the end of the step of recovering the refrigerant fluid or of injecting the refrigerant fluid into the air conditioning plant.

3. Maintenance process according to claim 1, wherein the step of creating the vacuum in the connector device (1) enable the evacuation of the air and the refrigerant fluid present in the tubular cavity (2) of said device (1) connected to the air conditioning plant.

4. Maintenance process according to claim 1, wherein during the step of creating the vacuum the device (1) avoids interacting with a joint (100) of the air conditioning plant

5. Maintenance process according to claim 1, wherein wherein the step of creating the vacuum recovers up to 3 grams of refrigerant.
